(19) Europäisches Patentamt
European Patent Office
Office européen des brevets

(11) **EP 2 401 530 B1**

(12) **EUROPÄISCHE PATENTSCHRIFT**

(45) Veröffentlichungstag und Bekanntmachung des Hinweises auf die Patenterteilung:
**17.08.2016 Patentblatt 2016/33**

(21) Anmeldenummer: **09740059.2**

(22) Anmeldetag: **12.10.2009**

(51) Int Cl.:
*F16J 9/26* (2006.01)    *C22C 38/34* (2006.01)
*C22C 38/38* (2006.01)    *C21D 6/00* (2006.01)
*C21D 9/40* (2006.01)    *C21D 1/25* (2006.01)

(86) Internationale Anmeldenummer:
**PCT/EP2009/007319**

(87) Internationale Veröffentlichungsnummer:
**WO 2010/097103 (02.09.2010 Gazette 2010/35)**

(54) **STAHLWERKSTOFFZUSAMMENSETZUNG ZUR HERSTELLUNG VON KOLBENRINGEN UND ZYLINDERLAUFBUCHSEN**

STEEL MATERIAL COMPOSITION FOR PRODUCING PISTON RINGS AND CYLINDER SLEEVES

COMPOSITION D'ACIER POUR PRODUIRE DES SEGMENTS DE PISTON ET DES CHEMISES DE CYLINDRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.02.2009 DE 102009010473**

(43) Veröffentlichungstag der Anmeldung:
**04.01.2012 Patentblatt 2012/01**

(73) Patentinhaber: **Federal-Mogul Burscheid GmbH 51399 Burscheid (DE)**

(72) Erfinder: **PELSOECZY, Laszlo 51515 Kürten (DE)**

(74) Vertreter: **Becker Kurig Straus Patentanwälte Bavariastrasse 7 80336 München (DE)**

(56) Entgegenhaltungen:
EP-A- 2 050 533          WO-A-2008/019716
DE-A1-102006 038 670     JP-A- 7 278 742
RU-C1- 2 336 364         US-A1- 2002 005 616
US-A1- 2006 191 508

**Beschreibung**

Die vorliegende Erfindung betrifft einen Kolbenring aus einer Stahlwerkstoffzusammensetzung. Außerdem betrifft die vorliegende Erfindung ein Verfahren zur Herstellung des Kolbenrings mit dieser Stahlwerkstoffzusammensetzung.

**Stand der Technik**

Kolbenringe dichten in einem Verbrennungskraftmotor den zwischen Kolbenkopf und Zylinderwand vorhandenen Spalt gegenüber dem Brennraum ab. Bei der Auf- und Abbewegung des Kolbens gleitet der Kolbenring einerseits mit seiner äußeren Umfangsfläche in ständiger federnder Anlage gegen die Zylinderwand, andererseits gleitet der Kolbenring, bedingt durch die Kippbewegungen des Kolbens, oszillierend in seiner Kolbenringnut, wobei seine Flanken wechselnd an der oberen oder unteren Nutenflanke der Kolbenringnut anliegen. Bei den jeweils gegeneinander laufenden Gleitpartnern tritt in Abhängigkeit des Materials ein mehr oder weniger starker Verschleiß auf, der bei einem Trockenlauf zu so genannten Fressern, Riefenbildung und schließlich zu einer Zerstörung des Motors führen kann. Um das Gleit- und Verschleißverhalten von Kolbenringen gegenüber der Zylinderwand zu verbessern, wurden diese an deren Umfangsfläche mit Beschichtungen aus unterschiedlichen Materialien versehen.

Bei Zylinderlaufbuchsen wie beispielsweise denen von Hubkolben-Verbrennungskraftmaschinen muss eine hohe Verschleißfestigkeit gegeben sein, da anderenfalls, d.h. bei dünner werdender Zylinderlaufbuchse, die Gasleckage und der Ölverbrauch zunehmen können sowie die Leistung des Motors sich verschlechtert. Durch eine sich abreibende Zylinderlaufbuchse wird Spalt zwischen Zylinderwand und Zylinderlaufbuchse immer größer, so dass Verbrennungsgase leichter an der Zylinderlaufbuchse vorbei austreten können (so genanntes Blow-By), was die Effizienz des Motors verringert. Durch einen vergrößerten Spalt wird weiterhin der im Verbrennungsraum zurückbleibende nicht abgestreifte Ölfilm dicker, so dass mehr Öl pro Zeiteinheit verloren gehen kann, also der Ölverbrauch erhöht wird.

Zur Herstellung hoch beanspruchter Teile von Verbrennungskraftmotoren, wie beispielsweise Kolbenringe, werden meist Gusseisenwerkstoffe bzw. Gusseisenlegierungen verwendet. Kolbenringe, insbesondere Kompressionsringe, unterliegen in hochbeanspruchten Motoren einer zunehmenden Belastung, unter anderem Kompressionsspitzendruck, Verbrennungstemperatur, EGR und Schmierfilmreduzierung, die deren Funktionseigenschaften, wie Verschleiß, Brandspurbeständigkeit, Microwelding und Korrosionsbeständigkeit, maßgeblich beeinflussen.

Gusseisenwerkstoffe gemäß dem Stand der Technik weisen jedoch ein hohes Bruchrisiko auf, so dass es bei der Verwendung bisheriger Werkstoffe häufig zu Ringbrüchen kommt. Gestiegene mechanisch-dynamische Belastungen führen zu kürzeren Lebensdauern von Kolbenringen. Ebenso kommt es zu starkem Verschleiß und Korrosion an Lauffläche und Flanke.

Höhere Zünddrücke, reduzierte Emissionen sowie die Kraftstoff-Direkteinspritzung bedeuten steigende Belastungen für Kolbenringe. Die Folge sind Beschädigungen und Aufplattierungen von Kolbenmaterial vor allem auf der unteren Kolbenringflanke.

Aufgrund der höheren mechanischen und dynamischen Beanspruchungen von Kolbenringen und Zylinderlaufbuchsen fordern immer mehr Motorenhersteller Kolbenringe und Zylinderlaufbuchsen aus hochwertigem Stahl (vergütet und hochlegiert, wie beispielsweise Werkstoff 1.4112). Hierbei bezeichnet man Eisenwerkstoffe mit weniger als 2,08 Gew.% Kohlenstoff als Stahl. Liegt der Kohlenstoffgehalt höher, so redet man von Gusseisen. Stahlwerkstoffe besitzen gegenüber Gusseisen bessere Festigkeits- und Zähigkeitseigenschaften, da keine Störung durch freien Graphit im Grundgefüge vorhanden ist.

Meist werden hochchromlegierte martensitische Stähle für die Herstellung von Stahlkolbenringen eingesetzt. Stahlkolbenringe werden aus Profildraht hergestellt. Der Profildraht wird rund gewickelt, aufgeschnitten und über einen "Unrund"-Dorn gezogen. Auf diesem Dorn erhält der Kolbenring durch einen Glühprozess seine erwünschte unrunde Form, wodurch die geforderten Tangentialkräfte eingestellt werden. Ein weiterer Nachteil der Herstellung von Kolbenringen aus Stahl ist, dass ab einem gewissen Durchmesser die Ringherstellung (Wickeln) aus Stahldraht nicht mehr möglich. Kolbenringe aus Gusseisen werden dagegen bereits unrund gegossen, so dass sie von Anfang an eine ideale Form aufweisen.

Gusseisen besitzt eine wesentlich niedrigere Schmelztemperatur als Stahl. Der Unterschied kann je nach chemischer Zusammensetzung bis zu 350°C betragen. Gusseisen ist daher einfacher zu schmelzen und zu gießen, da eine niedrigere Schmelztemperatur eine niedrigere Gießtemperatur und damit eine kleinere abkühlungsbedingte Schwindung bedeutet, wodurch der gegossene Werkstoff weniger Lunker bzw. Warm- und Kaltrisse aufweist. Eine niedrigere Gießtemperatur führt weiterhin zu einer geringeren Belastung des Formstoff (Erosion, Gasporositäten, Sandeinschlüsse) und des Ofens sowie zu geringeren Schmelzkosten.

Die Schmelztemperatur des Eisenwerkstoffs hängt nicht nur von seinem Kohlenstoffgehalt, sondern auch von dem "Sättigungsgrad" ab. Es gilt die vereinfachte Formel:

$$Sc = C/(4,26-1/3(Si+P)).$$

Je näher der Sättigungsgrad an 1 liegt, desto niedriger ist die Schmelztemperatur. Bei Gusseisen wird zumeist ein Sättigungsgrad von 1,0 angestrebt, wobei das Gusseisen eine Schmelztemperatur von 1150<0>C aufweist. Der Sättigungsgrad von Stahl beträgt, abhängig von der chemischen Zusammensetzung, ungefähr 0,18. Eutektischer Stahl weist eine Schmelztemperatur von 1500°C auf.

Der Sättigungsgrad kann durch den Si- oder P-Gehalt deutlich beeinflusst werden. Zum Beispiel wird sich ein um 3 Gew.-% höherer Gehalt an Silizium ähnlich wie ein 1 Gew.-% höherer C-Gehalt aus. Es ist somit möglich, einen Stahlwerkstoff mit einem C-Gehalt von 1 Gew.-% und 9,78 Gew.-% Silizium herzustellen, der die gleiche Schmelztemperatur wie Gusseisen mit einem Sättigungsgrad von 1,0 (C: 3,26 Gew.-%, Si: 3,0 Gew.-%) aufweist.

Durch eine drastische Erhöhung des Si-Gehalts kann der Sättigungsgrad des Stahlwerkstoffs erhöht werden und die Schmelztemperatur auf das Niveau von Gusseisen abgesenkt werden. Somit ist es möglich, Stahl mit Hilfe derjenigen Technik herzustellen, die auch für die Herstellung von Gusseisen, beispielsweise GOE 44, verwendet wird.

Kolbenringe aus hochsiliziumhaltigem und chromhaltigem Stahlgusswerkstoff sind im Stand der Technik bekannt. Allerdings beeinflusst das in höheren Mengen vorhandene Silizium und Chrom die Härtbarkeit des Werkstoffs negativ, da dessen Austenit-Umwandlungstemperatur "Ac3" erhöht wird.

Ein selbstschmierendes Kolbenringmaterial für Verbrennungsmotoren und ein entsprechender Kolbenring sind aus der US2002005616 (A1) bekannt, dass im Wesentlichen zwischen 0.3 und 0.8 Gew.-% C, zwischen 0.1 und 3.0 Ges.-% Si, zwischen 0.1 und 3.0 Gew.-% Mn, zwischen 0.03 und 0.3 Gew.-% S, zwischen 0.3 und 6.0 Gew.-% Cr, bis zu 3. Gew.-%% Cu, und Rest Eisen besteht.

Aus der japanischen Patentanmeldung JPH07278742 ist ein Lagerelement bekannt dessen Legierungszusammensetzung eine verzögerte Veränderung der Mikrostruktur bei einer wiederholten Spannungsbelastung zeigt. Der Stahl des Lagerelements umfasst dabei die folgende Zusammensetzung: 0.5 bis 1.5 Gew.-% C, zwischen 2.0 und 5.0 Gew.-% Mn, weniger als 0.0020 Gew.-% O, wobei der Rest Eisen ist, und wobei andere Legierungsbestandteile gestattet sind.

Weiterhin ist aus der Russischen Patents RU2336364(C1) ein authentischer Stahl bekannt der Kohlenstoff, Silizium, Mangan, Chrom, Stickstoff, Molybdän, Vanadium, Titan, Kupfer, Nickel, Wolfram, Bor, und Eisen enthält, und der eine höhere Abriebfestigkeit zusammen mit einem geringen Reibungs-Koeffizienten aufweist.

**Beschreibung der Erfindung**

Folglich ist es Aufgabe der vorliegenden Erfindung Kolbenringe bereitzustellen, die als Grundkörper eine hochsiliziumhaltige Stahlwerkstoffzusammensetzung umfassen, welche eine verbesserte Härtbarkeit aufweist. Die Stahlwerkstoffzusammensetzung soll durch die Herstellung im Schwerkraftguss die Eigenschaften von vergütetem Gusseisen mit Kugelgraphit in mindestens einem der folgenden Punkte übertreffen:

- Mechanische Eigenschaften wie E-Modul, Biegefestigkeit
- Widerstandsfähigkeit gegenüber Brüchen
- Gestaltfestigkeit
- Flankenverschleiß
- Laufflächenverschleiß

Diese Aufgabe wird erfindungsgemäß durch Kolbenringe mit den Merkmalen des Anspruchs 1 gelöst. Ein Verfahren zum Herstellen eines solchen Kolbenrings ist in dem Anspruch 3 offenbart. Bevorzugte Ausführungen sind in den abhängigen Ansprüchen beschrieben.

Erfindungsgemäße Kolbenringe umfassen Grundkörper mit einer Stahlwerkstoffzusammensetzung, welche die folgenden Elemente im angegebenen Anteil enthält:

| | | |
|---|---|---|
| C: | 0,5 - 1,2 | Gew.-% |
| Cr: | 6,0 - 20,0 | Gew.-% |
| Mn: | 3,0 - 15,0 | Gew.-% |
| Si: | 2,0 - 10,0 | Gew.-% |

und optional

| | | |
|---|---|---|
| Al: | max. 0,02 | Gew.-% |

(fortgesetzt)

| B: | max. 0,1 | Gew.-% |
| Cu: | max. 2,0 | Gew.-% |
| Mo: | max. 3,0 | Gew.-% |
| Nb: | max. 0,05 | Gew.-% |
| Ni: | max. 2,0 | Gew.-% |
| P: | max. 0,1 | Gew.-% |
| S: | max. 0,05 | Gew.-% |
| Sn: | max. 0,05 | Gew.-% |
| Ti: | max. 1,5 | Gew.-% |
| V: | max. 1,5 | Gew.-% |
| W: | max. 1,5 | Gew.-% |

Rest Eisen und unvermeidbare Verunreinigungen,wobei die Summe der Anteile von Nb, Ti, V und W maximal 1,5 Gew.-% beträgt und die Stahlwerkstaffzusammensetzung ausschließlich Elemente, ausgewählt aus der Gruppe, bestehend aus Al, B, C, Cr, Cu, Fe, Mn, Mo, Nb, Ni, P, S, Si, Sn, Ti, V und W enthält, wobei die Summe dieser Elemente 100 Gew.-% ergibt,

wobei der Kolbenring in einem Verfahren hergestellt wurde, welches die folgenden Schritte umfasst:

    a. Herstellen einer Schmelze der Ausgangsmaterialien, und
    b. Abgießen der Schmelze in eine vorgefertigte Form.

Das enthaltene Mangan fungiert als Austenitbildner, das das Gammagebiet erweitert und die Austentit-Umwandlungstemperatur Ac3 nach oben verschiebt. Auf diese Weise wird erfindungsgemäß eine verbesserte Härtbarkeit des Stahlwerkstoffs erzielt.

Die erfindungsgemäße Stahlwerkstoffzusammensetzung reduziert die Neigung der daraus hergestellten Werkstücke, unter starker Hitze ihre Form zu verändern und sorgt somit für ein dauerhaft hohes Leistungsvermögen und vermindert darüber hinaus den Ölverbrauch. Die erfindungsgemäße Stahlwerkstoffzusammensetzung eignet sich daher aufgrund ihrer hervorragenden Eigenschaften insbesondere für die Herstellung von Kolbenringen im automotiven undLB-Bereich

Die erfindungsgemäße Stahlwerkstoffzusammensetzung weist weiterhin den Vorteil auf, dass die Herstellung von beispielsweise Stahlkolbenringen und -zylinderlaufbuchsen mit den zur Herstellung von Gusseisen-Werkstücken notwendigen Maschinen und Technologien ermöglicht wird. Zudem entsprechen die Herstellungskosten denen von Gusseisen-Kolbenringen, was dem Hersteller einen Kostenvorteil und eine bessere Wertschöpfung bietet. Ebenso können Werkstoffparameter frei vom Zulieferer eingestellt werden.

Erfindungsgemäß wird weiterhin ein Verfahren zur Herstellung eines erfindungsgemäßen Kolbenrings aus einer Stahlwerkstoffzusammensetzung bereitgestellt, welches die folgenden Schritte umfasst:

    a. Herstellen einer Schmelze der Ausgangsmaterialien, und
    b. Abgießen der Schmelze in eine vorgefertigte Form.

sowie

    c. Austenitisieren der Stahlwerkstoffzusammensetzung oberhalb ihrer Ac3-Temperatur,
    d. Abschrecken der Stahlwerkstoffzusammensetzung in einem geeigneten Abschreckmedium, und
    e. Anlassen der Stahlwerkstoffzusammensetzung bei einer Temperatur im Bereich von 400 bis 700°C in einem Schutzgasofen.

Als Ausgangsmaterialien können beispielsweise Stahlschrott, Kreislaufmaterial und Legierungsstoffe verwendet werden. Der Schmelzprozess erfolgt in einem Ofen, vorzugsweise einem Kupolofen. Anschließend wird ein Rohling unter Erstarrung der Schmelze hergestellt. Der Rohling kann dabei mit im Stand der Technik bekannte Methoden gegossen werden, wie beispielsweise Schleuderguss, Strangguss, Stempel-Pressverfahren, Croning oder bevorzugt Grünsandformen.

Nach Erkalten der Stahlwerkstoffzusammensetzung wird die Form ausgelehrt und der erhaltene Rohling geputzt.

Als Abschreckmedium wird bevorzugt Öl verwendet.

Zur weiteren Härtung des erfindungsgemäßen Stahlwerkstoffs kann im Anschluss an die zuvor erwähnten Verfahrensschritte ein Nitrieren der erhaltenen Stahlwerkstoff-Zusammensetzung erfolgen. Dies kann beispielsweise durch Gasnitrieren, Plasmanitrieren oder Drucknitrieren erfolgen.

Das folgende Beispiel erläutert die Erfindung, ohne sie zu beschränken.

Beispiel

Es wurde ein Kolbenring aus einer erfindungsgemäßen Stahlwerkstoffzusammensetzung der folgenden Zusammensetzung hergestellt:

| Al: | 0,002 | Gew.-% | P:  | 0,03  | Gew.-% |
| --- | --- | --- | --- | --- | --- |
| B:  | 0,007 | Gew.-% | S:  | 0,009 | Gew.-% |
| C:  | 0,9   | Gew.-% | Si: | 3,0   | Gew.-% |
| Cr: | 13,0  | Gew.-% | Sn: | 0,001 | Gew.-% |
| Cu: | 0,05  | Gew.-% | Ti: | 0,011 | Gew.-% |
| Mn: | 4,0   | Gew.-% | V:  | 0,025 | Gew.-% |
| Mo: | 0,5   | Gew.-% | W:  | 0,015 | Gew.-% |
| Nb: | 0,002 | Gew.-% | Fe: | Rest  |        |

Dies erfolgte durch Herstellen einer Schmelze der Ausgangsmaterialien (Stahlschrott, Kreislaufmaterial und Legierungsstoffe), und Abgießen der Schmelze in eine vorgefertigte Grünsandform. Anschließend wurde die Form ausgelehrt und der erhaltene Kolbenring geputzt. Der Kolbenring wurde daraufhin vergütet. Diese erfolgt durch Austenitisieren oberhalb der Ac3-Temperartur der Stahlwerkstoffzusammensetzung, Abschrecken in Öl, und Anlassen bei einer Temperatur im Bereich von 400 bis 700°C in einem Schutzgasofen.

**Patentansprüche**

1. Kolbenring, der als Grundkörper eine Stahlwerkstoffzusammensetzung umfasst, **dadurch gekennzeichnet, dass** die Stahlwerkstoffzusammensetzung aus den folgenden Elementen im angegebenen Anteil, bezogen auf 100 Ges.-% der Stahlwerkstoffzusammensetzung besteht:

| C:  | 0,5 - 1,2  | Gew.-% |
| --- | --- | --- |
| Cr: | 6,0 - 20,0 | Gew.-% |
| Mn: | 3,0 - 15,0 | Gew.-% |
| Si: | 2,0 - 10,0 | Gew.-% |

optional:

| Al: | max. 0,02 | Gew.-% |
| --- | --- | --- |
| B:  | max. 0,1  | Gew.-% |
| Cu: | max. 2,0  | Gew.-% |
| Mo: | max. 3,0  | Gew.-% |
| Nb: | max. 0,05 | Gew.-% |
| Ni: | max. 2,0  | Gew.-% |
| P:  | max. 0,1  | Gew.-% |
| S:  | max. 0,05 | Gew.-% |
| Sn: | max. 0,05 | Gew.-% |
| Ti: | max. 1,5  | Gew.-% |
| V:  | max. 1,5  | Gew.-% |
| W:  | max. 1,5  | Gew.-% |

Rest Eisen und übliche Verunreinigungen,
wobei die Summe der Anteile von Nb, Ti, V und W maximal 1,5 Gew.-% beträgt und die Stahlwerkstoffzusammensetzung ausschließlich Elemente, ausgewählt aus der Gruppe, bestehend aus Al, B, C, Cr, Cu, Fe, Mn, Mo, Nb, Ni, P, S, Si, Sn, Ti, V und W enthält, wobei die Summe dieser Elemente 100 Gew.-% ergibt, wobei der Kolbenring in einem Verfahren hergestellt wurde, welches die folgenden Schritte umfasst:

    a. Herstellen einer Schmelze der Ausgangsmaterialien, und
    b. Abgießen der Schmelze in eine vorgefertigte Form.

2. Kolbenring nach Anspruch 1, wobei, der Eisenanteil zwischen 45,0 - 88,5 Gew.-% beträgt.

3. Verfahren zur Herstellung eines Kolberings gemäß Anspruch 1 oder 2, wobei die Herstellung des Kolbenrings die folgenden Schritte umfasst:

    a. Herstellen einer Schmelze der Ausgangsmaterialien, und
    b. Abgießen der Schmelze in eine vorgefertigte Form.

sowie gegebenenfalls die folgenden Schritte:

    c. Austenitisieren des Kolbenrings oberhalb seiner Ac3-Temperartur,
    d. Abschrecken des Kolbenrings in einem geeigneten Abschreckmedium, und
    e. Anlassen des Kolbenrings bei einer Temperatur im Bereich von 400 bis 700°C in einem Schutzgasofen.

4. Verfahren gemäß Anspruch 3, weiterhin umfassend den folgenden Schritt:

    f. Nitrieren des erhaltenen Kolbenrings.

## Claims

1. A piston ring having a steel material composition as the basic element, **characterized in that** the steel material composition contains the following elements in the proportions indicated relative to 100% by weight of the steel material composition:

| | |
|---|---|
| C: | 0.5 - 1.2% by weight |
| Cr: | 6.0 - 20.0% by weight |
| Mn: | 3.0 - 15.0% by weight |
| Si: | 2.0 - 10.0% by weight |

optional:

| | |
|---|---|
| Al: | max. 0.02% by weight |
| B: | max. 0.1% by weight |
| Cu: | max. 2.0% by weight |
| Mo: | max. 3.0% by weight |
| Nb: | max. 0.05% by weight |
| Ni: | max. 2.0% by weight |
| P: | max. 0.1% by weight |
| S: | max. 0.05% by weight |
| Sn: | max. 0.05% by weight |
| Ti: | max. 1.5% by weight |
| V: | max. 1.5% by weight |
| W: | max. 1.5% by weight |

Residual iron and usual contaminations, wherein the total sum of the fractions of Nb, Ti, V and W is a maximum of 1.5% by weight, and the steel material composition only contains elements selected from the group consisting of Al, B, C, Cr, Cu, Fe, Mn, Mo, Nb, Ni, P, S, Si, Sn, Ti, V and W, wherein the sum of these elements represents 100% by weight,
wherein the piston ring was produced via a method that includes the following steps:

  a. Producing a melt of the starter materials, and
  b. Pouring the melt into a prefabricated form.

2. Piston ring according to claim 1, wherein the iron content is between 45.0 - 88.5 % by weight.

3. A method for producing a piston ring as recited in claim 1 or 2, wherein the production of the piston ring includes the following steps:

  a. Producing a melt of the starter materials, and
  b. Pouring the melt into a prefabricated form,
  and the following steps as necessary:

  c. Austenitising the piston ring above its Ac3 temperature,
  d. Quenching the piston ring in a suitable quenching medium, and
  e. Tempering the piston ring at a temperature in the range from 400 to 700°C in a controlled atmosphere furnace.

4. Method according to claim 3, further including the following step:

  f. Nitriding the piston ring obtained.

**Revendications**

1. Segment de piston, qui comprend comme corps de base une composition de matériau en acier, **caractérisé en ce que** la composition de matériau en acier est constituée des éléments suivants dans la fraction indiquée, par rapport à 100% en poids de la composition de matériau en acier :

| C : | 0,5-1,2 | % en poids |
|-----|---------|------------|
| Cr : | 6,0-20,2 | % en poids |
| Mn : | 3,0-15,0 | % en poids |
| Si : | 2,0-10,0 | % en poids |

et en option

| Al : | max 0,02 | % en poids |
|------|----------|------------|
| B : | max 0,1 | % en poids |
| Cu : | max 2,0 | % en poids |
| Mo : | max 3,0 | % en poids |
| Nb : | max 0,05 | % en poids |
| Ni : | max 4,0 | % en poids |
| P : | max 0,1 | % en poids |
| S : | max 0,05 | % en poids |
| Sn : | max 0,05 | % en poids |
| Ti : | max 1,5 | % en poids |
| V : | max 1,5 | % en poids |
| W : | max 1,5 | % en poids |

fer résiduel et autres impuretés,
dans lequel la somme des fractions de Nb, Ti, V et W s'élève au maximum à 1,5% en poids et la composition de matériau en acier contient exclusivement des éléments, sélectionnées dans le groupe, constitué de Al, B, C, Cr, Cu, Fe, Mn, Mo, Nb, Ni, P, S, Si, Sn, Ti, V et W, dans lequel la somme de ces éléments donne 100% en poids, dans lequel le segment de piston a été fabriqué dans le cadre d'un procédé, qui comprend les étapes suivantes :

    a. production d'une fusion des matériaux de départ et
    b. coulée de la fusion dans un moule préfabriqué.

2. Segment de piston selon la revendication 1, dans lequel la teneur en fer est comprise entre 45,0-88,5% en poids.

3. Procédé de fabrication d'un segment de piston selon la revendication 1 ou 2, dans lequel la fabrication du segment de piston comprend les étapes suivantes :

    a. production d'une fusion des matériaux de départ et
    b. coulée de la fusion dans un moule préfabriqué ainsi que le cas échéant les étapes suivantes :
    c. austénitisation du segment de piston au-dessus d'une température Ac3,
    d. trempe du segment de piston dans un agent de trempe approprié et
    e. recuit du segment de piston à une température dans la plage de 400 à 700°C dans un four à atmosphère contrôlée.

4. Procédé selon la revendication 3, comprenant en outre l'étape suivante :

    f. nitruration du segment de piston obtenu.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002005616 A1
- JP H07278742 B
- RU 2336364 C1